(19) Europäisches Patentamt
European Patent Office
Office européen des brevets

(11) **EP 4 257 545 A1**

(12) **EUROPEAN PATENT APPLICATION**
published in accordance with Art. 153(4) EPC

(43) Date of publication:
**11.10.2023 Bulletin 2023/41**

(21) Application number: **21917773.0**

(22) Date of filing: **28.12.2021**

(51) International Patent Classification (IPC):
*C01B 21/064* (2006.01)      *C08K 3/38* (2006.01)
*C08K 5/5419* (2006.01)      *C08L 83/07* (2006.01)
*C08L 101/00* (2006.01)      *C09K 5/14* (2006.01)

(52) Cooperative Patent Classification (CPC):
**C01B 21/064; C08K 3/38; C08K 5/5419;
C08L 83/04; C08L 101/00; C09K 5/14**

(86) International application number:
**PCT/JP2021/048887**

(87) International publication number:
**WO 2022/149553 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.01.2021   JP 2021000874**

(71) Applicant: **Denka Company Limited
Tokyo 103-8338 (JP)**

(72) Inventors:
• **WADA, Kosuke
  Tokyo 103-8338 (JP)**
• **FUJI, Kiyotaka
  Tokyo 103-8338 (JP)**

(74) Representative: **Gulde & Partner
Patent- und Rechtsanwaltskanzlei mbB
Wallstraße 58/59
10179 Berlin (DE)**

(54) **AGGREGATED BORON NITRIDE PARTICLES, BORON NITRIDE POWDER, HEAT-CONDUCTIVE RESIN COMPOSITION, AND HEAT-DISSIPATION SHEET**

(57)      The present invention relates to aggregated boron nitride particles in which hexagonal boron nitride primary particles are aggregated and which include an alkyl group-containing silane coupling agent. The present invention can provide boron nitride powder for obtaining a heat-dissipation sheet with excellent thermal conductivity, a heat-dissipation sheet with excellent thermal conductivity, and a method of producing a heat-dissipation sheet with excellent thermal conductivity.

[Fig. 1]

EP 4 257 545 A1

**Description**

Technical Field

The present invention relates to aggregated boron nitride particles in which hexagonal boron nitride primary particles are aggregated, boron nitride powder including the boron nitride particles, a heat-conductive resin composition including the boron nitride powder and a resin, and a heat-dissipation sheet formed by shaping the heat-conductive resin composition.

Background Art

How to efficiently dissipate heat generated during use is an important problem in heat generating electronic components such as a power device, a transistor, a thyristor, and a CPU. Conventionally, as measures for such heat-dissipation, (1) enhancement of thermal conductivity of an insulation layer for a printed wiring board on which a heat generating electronic component is mounted and (2) attachment of a heat generating electronic component or a printed wiring board on which a heat generating electronic component is mounted to a heatsink via an electrically insulating thermal interface material (thermal interface materials) have been generally carried out. Silicone resin or epoxy resin filled with ceramic powder is used as an insulation layer and a thermal interface material for printed wiring boards.

Boron nitride powder having characteristics of high thermal conductivity, high insulation properties, low specific permittivity, and the like has attracted attention as ceramic powder. For example, PTL 1 discloses boron nitride powder in which boron nitride primary particles are aggregated, with the boron nitride powder having peak A present in a region of 5 $\mu$m or more and less than 30 $\mu$m and peak B present in a region of 50 $\mu$m or more and less than 100 $\mu$m in a volume-basis particle size distribution.

Citation List

Patent Literature

PTL 1: JP 2020-164365 A

Summary of Invention

Technical Problem

A heat-dissipation sheet with excellent thermal conductivity and insulation properties can be obtained by using the boron nitride powder described in PTL 1. However, a heat-dissipation sheet with more excellent thermal conductivity and insulation properties is demanded in association with recent miniaturization of electronic devices and increase of amounts of heat generation of heat generating electronic components.

Accordingly, an object of the present invention is to provide aggregated boron nitride particles for obtaining a heat-dissipation sheet excellent in thermal conductivity and insulation properties, boron nitride powder including the aggregated boron nitride particles, a heat-conductive resin composition including the boron nitride powder, and a heat-dissipation sheet formed by shaping the heat-conductive resin composition.

Solution to Problem

As a result of diligently advancing studies, the present inventors have found that the above problem can be solved by using aggregated boron nitride particles including a silane coupling agent containing an alkyl group.

The present invention is based on the above finding, and the summary thereof is as follows.

[1] Aggregated boron nitride particles in which hexagonal boron nitride primary particles are aggregated, the aggregated boron nitride particles including an alkyl group-containing silane coupling agent.
[2] The aggregated boron nitride particles according to item [1] above, in which an alkyl group of the alkyl group-containing silane coupling agent has 1 to 14 carbon atoms.
[3] The aggregated boron nitride particles according to item [1] or [2] above, in which a ratio ((Ia/Ib) $\times$ 100) between intensity Ia of an infrared absorption peak (2923 cm$^{-1}$ $\pm$ 2 cm$^{-1}$) originating from an alkyl group and intensity Ib of an infrared absorption peak (1377 cm$^{-1}$ $\pm$ 2 cm$^{-1}$) originating from boron nitride is within a range of 0.1 to 50.
[4] Boron nitride powder including at least the aggregated boron nitride particles according to any of items [1] to [3] above, in which a particle size distribution of the boron nitride powder has at least a first local maximum point, a second local maximum point with a particle diameter larger than that at the first local maximum point, and a third local maximum point with a particle diameter larger than that at the second local maximum point; the particle diameter at the first local maximum point is 0.4 $\mu$m or more and less than 10 $\mu$m; the particle diameter at the second local maximum point is 10 $\mu$m or more and less than 40 $\mu$m; and the particle diameter at the third local maximum point is 40 $\mu$m or more and less than 110 $\mu$m.

[5] The boron nitride powder according to item [4] above, in which an absolute value of a difference between a particle diameter at which a cumulative amount of frequencies becomes 10% in the particle size distribution of the boron nitride powder and a particle diameter at a local minimum point between a local maximum point with the smallest particle diameter and a local maximum point with the second smallest particle diameter in the particle size distribution of the boron nitride powder is 3 to 30 $\mu$m.

[6] The boron nitride powder according to item [4] or [5] above, in which a local maximum point adj acent to the first local maximum point is the second local maximum point, a local maximum point adjacent to the second local maximum point is the third local maximum point, and an absolute value of a difference between a particle diameter at a first local minimum point between the first local maximum point and the second local maximum point, and a particle diameter at a second local minimum point between the second local maximum point and the third local maximum point is 15 to 60 $\mu$m.

[7] The boron nitride powder according to any of items [4] to [6] above, in which a half-width of a peak having the third local maximum point is 20 to 60 $\mu$m.

[8] The boron nitride powder according to any of items [4] to [7] above, in which crushing strength of the aggregated boron nitride particles is 5 to 18 MPa.

[9] A heat-conductive resin composition including the boron nitride powder according to any of items [4] to [8] above.

[10] A heat-dissipation sheet formed by shaping the heat-conductive resin composition according to item [9] above.

Advantageous Effects of Invention

According to the present invention, boron nitride particles, boron nitride powder, and a heat-conductive resin composition for obtaining a heat-dissipation sheet excellent in thermal conductivity, and a heat-dissipation sheet excellent in thermal conductivity can be provided.

Brief Description of Drawings

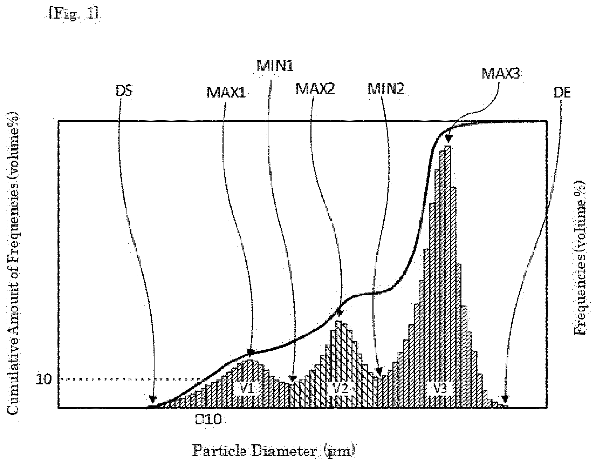

Fig. 1 is a conceptual diagram of a particle size distribution of boron nitride powder according to the present invention.

Description of Embodiments

Aggregated Boron Nitride Particles

Aggregated boron nitride particles of the present invention are aggregated boron nitride particles in which hexagonal boron nitride primary particles are aggregated and include an alkyl group-containing silane coupling agent.

The aggregated boron nitride particles including an alkyl group-containing silane coupling agent can be identified by infrared spectroscopy (hereinafter, referred to as "IR") and can be detected by an infrared absorption peak (2923 cm$^{-1}$ $\pm$ 2 cm$^{-1}$) originating from alkyl groups and an infrared absorption peak (1377 cm$^{-1}$ $\pm$ 2 cm$^{-1}$) originating from boron nitride.

Incidentally, Fourier transform infrared spectroscopy (hereinafter, referred to as "FT-IR") is used as IR measurement. A detailed measurement method is described in the examples.

In the present invention, a ratio ((Ia/Ib) $\times$ 100) between intensity Ia of an infrared absorption peak (2923 cm$^{-1}$ $\pm$ 2 cm$^{-1}$) originating from alkyl groups and intensity Ib of an infrared absorption peak (1377 cm$^{-1}$ $\pm$ 2 cm$^{-1}$) originating from boron nitride is preferably within a range of 0.1 to 50. When the intensity ratio falls within this range, insulation properties and thermal conductivity of a dissipation sheet are improved. From the above viewpoint, ((Ia/Ib) $\times$ 100) is more preferably within a range of 0.5 to 40 and still more preferably within a range of 10 to 30.

Alkyl Group-Containing Silane Coupling Agent

While silane coupling agents usually have a hydrolyzable silyl group interacting with an inorganic material and an organic functional group interacting with an organic material, in the alkyl group-containing silane coupling agent according to the present invention, an organic chain binding to a silyl group is an alkyl group, a terminal thereof has no organic functional group, and it is considered that the alkyl group-containing silane coupling agent moderately binds to or has enhanced compatibility with an organic material through an intermolecular force.

Therefore, it is inferred that when a heat-dissipation sheet is shaped from a resin composition in which the aggregated boron nitride particles of the present invention and a resin are mixed, voids generated between the aggregated boron nitride particles are filled as the silane coupling agent moves to suppress generation of voids in the heat-dissipation sheet, and insulation properties and thermal conductivity of the heat-dissipation sheet are consequently enhanced.

A chain length (the number of carbons) of the alkyl group in the alkyl group-containing silane coupling agent used in the present invention is preferably 1 to 14. When the chain length of the alkyl group is within this range, insulation properties and thermal conductivity of a heat-dissipation sheet are improved. From the above viewpoint, the chain length of the alkyl group is more preferably within a range of 4 to 10.

Specific Surface Area

A specific surface area of the aggregated boron nitride particles of the present invention measured by a BET method is preferably 2 to 7 $m^2$/g. When the specific surface area of the aggregated boron nitride particles measured by a BET method is 2 $m^2$/g or more, a contact area between the aggregated boron nitride particles and a resin can be increased, and generation of voids in a heat-dissipation sheet can be suppressed. In addition, an aggregation form developing high thermal conductivity is easily maintained, and insulation breakdown properties and thermal conductivity of a dissipation sheet can be improved.

On the other hand, when the specific surface area of the aggregated boron nitride particles measured by a BET method is 7 $m^2$/g or less, the aggregated boron nitride particles can be added to a resin to highly fill the resin, generation of voids in a heat-dissipation sheet can be suppressed, and insulation breakdown properties can be improved. From the above viewpoints, the specific surface area of the aggregated boron nitride particles measured by a BET method is more preferably 2 to 6 $m^2$/g and still more preferably 3 to 6 $m^2$/g. Incidentally, the specific surface area of the aggregated boron nitride particles measured by a BET method can be measured by a single point BET method using a specific surface area measurement device (Quantasorb, manufactured by Yuasa Ionics Co., Ltd.).

Crushing Strength

Crushing strength of the aggregated boron nitride particles of the present invention is preferably 5 to 18 MPa. When the crushing strength of the aggregated boron nitride particles is 5 MPa or more, the aggregated boron nitride particles can be prevented from being crushed during production of a heat-dissipation sheet. When the crushing strength of the aggregated boron nitride particles is 18 MPa or less, a resin is allowed to sufficiently penetrate into the aggregated boron nitride particles in a heat-dissipation sheet, and air can be prevented from remaining in the aggregated boron nitride particles in a heat-dissipation sheet. From these viewpoints, the crushing strength of the aggregated boron nitride particles of the present invention is more preferably 6 to 15 MPa and still more preferably 7 to 13 MPa. Incidentally, the crushing strength of the aggregated boron nitride particles can be measured by the method described in the examples described later.

Ratio of Major Axis to Thickness of Hexagonal Boron Nitride Primary Particles

A ratio (major axis/thickness) of a major axis to a thickness of the hexagonal boron nitride primary particles in the aggregated boron nitride particles of the present invention is preferably 7 to 16. When the ratio (major axis/thickness) of a major axis to a thickness of the hexagonal boron nitride primary particles is 7 to 16, insulation breakdown properties of a heat-dissipation sheet are further improved. From the above-described viewpoints, the ratio (major axis/thickness) of a major axis to a thickness of the hexagonal boron nitride primary particles is more preferably 8 to 15 and still more preferably 8 to 13. Incidentally, the ratio (major axis/thickness) of a major axis to a thickness of the hexagonal boron nitride primary particles is a value obtained by dividing an average value of major axes of the hexagonal boron nitride primary particles by an average value of thicknesses.

The average value of major axes and the average value of thicknesses of the hexagonal boron nitride primary particles are obtained by the following method.

Produced aggregated boron nitride particles are observed with respect to particles with major axes and minor axes observable in a surface condition using a scanning electron microscope at 1000- to 5000-fold observation magnification. An obtained particle image is imported into image analyzing software, major axes and thicknesses of particles are measured, major axes and thicknesses of arbitrary 100 particles are obtained, and the average values thereof are taken as the average value of major axes and the average value of thicknesses.

Major Axis of Hexagonal Boron Nitride Primary Particles

An average value of major axes of the hexagonal boron nitride primary particles in the aggregated boron nitride particles of the present invention is preferably 2 to 12 μm. When the average value of major axes of the hexagonal boron nitride primary particles is 2 μm or more, thermal conductivity of the aggregated boron nitride particles is improved. In addition, when the average value of major axes of the hexagonal boron nitride primary particles is 2 μm or more, penetration of a resin into the aggregated boron nitride particles is facilitated, and generation of voids in a heat-dissipation sheet can be suppressed. On the other hand, when the average value of major axes of the hexagonal boron nitride primary particles is 12 μm or less, the inside structure of the aggregated boron nitride particles is made dense, and the crushing strength of the aggregated boron nitride particles can be enhanced, and thermal conductivity of the aggregated boron nitride particles can be improved. From the above-described viewpoints, the average value of major axes of the hexagonal boron nitride primary particles is more preferably 3 to 11 μm and still more preferably 3 to 10 μm.

Boron Nitride Powder

The boron nitride powder of the present invention includes at least the above-described aggregated boron nitride particles. The boron nitride powder of the present invention will be described with reference to Fig. 1. Fig. 1 is a conceptual diagram of a particle size distribution of the boron nitride powder of the present invention. The vertical axis of the particle size distribution illustrated in Fig. 1 is linear and the horizontal axis is logarithmic. Incidentally, the particle size distribution of the boron nitride powder illustrated in Fig. 1 is merely a conceptual diagram and does not limit the boron nitride powder of the present invention.

The boron nitride powder of the present invention is boron nitride powder including at least aggregated boron nitride particles in which hexagonal boron nitride primary particles are aggregated. As illustrated in Fig. 1, it is preferable that the particle size distribution of the boron nitride powder of the present invention have at least a first local maximum point (MAX1), a second local maximum point (MAX2) with a particle diameter larger than that at the first local maximum point (MAX1), and a third local maximum point (MAX3) with a particle diameter larger than that at the second local maximum point (MAX2). Then, it is preferable that the particle diameter at the first local maximum point (MAX1) be 0.4 μm or more and less than 10 μm, the particle diameter at the second local maximum point (MAX2) be 10 μm or more and less than 40 μm, and the particle diameter at the third local maximum point (MAX3) be 40 μm or more and 110 μm or less. Consequently, filling properties of the boron nitride powder in a heat-dissipation sheet can be enhanced, and thermal conductivity of the heat-dissipation sheet can be made excellent. Incidentally, the particle size distribution of the boron nitride powder of the present invention can be measured by a method in the examples described later.

As described above, the particle size distribution of the boron nitride powder of the present invention has at least the first local maximum point (MAX1), the second local maximum point (MAX2) with a particle diameter larger than the first local maximum point (MAX1), and the third local maximum point (MAX3) with a particle diameter larger than the second local maximum point (MAX2). When the particle size distribution of the boron nitride powder does not have even one local maximum point of the first local maximum point (MAX1), the second local maximum point (MAX2), and the third local maximum point (MAX3), filling properties of the boron nitride powder in a heat-dissipation sheet are impaired, and thermal conductivity of the heat-dissipation sheet is deteriorated.

The particle diameter at the first local maximum point (MAX1) is preferably 0.4 μm or more and less than 10 μm. When the particle diameter at the first local maximum point (MAX1) is 0.4 μm or more and less than 10 μm, filling properties of the boron nitride powder in a heat-dissipation sheet are enhanced, and thermal conductivity of the heat-dissipation sheet is further improved. From such a viewpoint, the particle diameter at the first local maximum point (MAX1) is more preferably 1.0 to 8.0 μm and still more preferably 3.0 to 6.0 μm.

The particle diameter at the second local maximum point (MAX2) is preferably 10 μm or more and less than 40 μm. When the particle diameter at the second local maximum point (MAX2) is 10 μm or more and less than 40 μm, filling properties of the boron nitride powder in a heat-dissipation sheet are enhanced, and thermal conductivity of the heat-dissipation sheet is further improved. From such a viewpoint, the particle diameter at the second local maximum point (MAX2) is more preferably 15 to 36 μm and still more preferably 18 to 30 μm.

The particle diameter at the third local maximum point (MAX3) is preferably 40 μm to 110 μm. When the particle diameter at the third local maximum point (MAX3) is 40 μm or more and 110 μm or less, filling properties of the boron nitride powder in a heat-dissipation sheet are enhanced, and thermal conductivity of the heat-dissipation sheet is further improved. From such a viewpoint, the particle diameter at the third local maximum point (MAX3) is more preferably 55 to 95 μm and still more preferably 65 to 90 μm.

A local maximum point adjacent to the first local maximum point (MAX1) is the second local maximum point (MAX2), a local maximum point adjacent to the second local maximum point (MAX2) is the third local maximum point (MAX3), and an absolute value of a difference between a particle diameter at a first local minimum point (MIN1) between the first local maximum point (MAX1) and the second local maximum point (MAX2), and a particle diameter at a second local minimum point (NIN2) between the second local maximum point (MAX2) and the third local maximum point (MAX3) is preferably 15 to 60 µm. When the absolute value of the difference between the particle diameter at the first local minimum point (MIN1) and the particle diameter at the second local minimum point (NIN2) is 15 to 60 µm, filling properties of the boron nitride powder in a heat-dissipation sheet can be further enhanced, and thermal conductivity of the heat-dissipation sheet can be made more excellent. From such a viewpoint, the absolute value of the difference between the particle diameter at the first local minimum point (MIN1) and the particle diameter at the second local minimum point (NIN2) is more preferably 21 to 43 µm and still more preferably 25 to 35 µm.

A half-width of a peak having the third local maximum point (MAX3) is preferably 20 to 60 µm. When the half-width of the peak having the third local maximum point (MAX3) is 20 to 60 µm, filling properties of the boron nitride powder in a heat-dissipation sheet can be further enhanced, and thermal conductivity of the heat-dissipation sheet can be made more excellent. From such a viewpoint, the half-width of the peak having the third local maximum point (MAX3) is more preferably 28 to 53 µm and still more preferably 40 to 50 µm. Incidentally, the half-width of the peak having the third local maximum point (MAX3) is a peak width at half the frequency of the third local maximum point (MAX3).

An absolute value of a difference between a particle diameter at which a cumulative amount of frequencies becomes 10% in the particle size distribution of the boron nitride powder and a particle diameter at a local minimum point between a local maximum point with the smallest particle diameter and a local maximum point with the second smallest particle diameter in the particle size distribution of the boron nitride powder is preferably 3 to 30 µm. For example, in the case of the particle size distribution of the boron nitride powder illustrated in Fig. 1, the reference sign D10 indicates the particle diameter at which the cumulative amount of frequencies becomes 10%, the local maximum point with the smallest particle diameter in the particle size distribution of the boron nitride powder is the first local maximum point (MAX1), the local maximum point with the second smallest particle diameter in the particle size distribution of the boron nitride powder is the second local maximum point (MAX2), and the local minimum point between the local maximum point with the smallest particle diameter and the local maximum point with the second smallest particle diameter is the first local minimum point (MIN1). When the absolute value of the difference between the particle diameters described above is 3 to 30 µm, filling properties of the boron nitride powder in a heat-dissipation sheet can be further enhanced, and thermal conductivity of the heat-dissipation sheet can be made more excellent. From such a viewpoint, the absolute value of the difference between the particle diameters described above is more preferably 4 to 17 µm and still more preferably 6 to 15 µm.

A cumulative amount (V1) of frequencies between a peak start and a peak end of a peak having the first local maximum point (MAX1) is preferably 2% to 25% by volume. When the cumulative amount (V1) is 2% to 25% by volume, filling properties of the boron nitride powder in a heat-dissipation sheet can be further enhanced, and thermal conductivity of the heat-dissipation sheet can be made more excellent. From such a viewpoint, the cumulative amount (V1) is more preferably 5% to 20% by volume. Incidentally, the peak start of a peak having the first local maximum point (MAX1) is a local minimum point on the small particle diameter side with respect to the first local maximum point (MAX1). In a case where there is no local minimum point on the small particle diameter side with respect to the first local maximum point (MAX1), the peak start is the end (DS) on the small particle diameter side in the particle size distribution. In addition, the peak end of a peak having the first local maximum point (MAX1) is a local minimum point (MIN1) on the large particle diameter side with respect to the first local maximum point (MAX1). Then, the cumulative amount (V1) of frequencies is a value obtained by subtracting the frequency of the particle diameter at the local minimum point (MIN1) on the large particle diameter side with respect to the first local maximum point (MAX1) from a cumulative amount of frequencies from the particle diameter at the local minimum point on the small particle diameter side with respect to the first local maximum point (MAX1) or from the particle diameter at the end (DS) on the small particle diameter side in the particle size distribution to the particle diameter at the local minimum point (MIN1) on the large particle diameter side with respect to the first local maximum point (MAX1). Incidentally, subtraction of the frequency of the particle diameter at the local minimum point (MIN1) on the large particle diameter side with respect to the first local maximum point (MAX1) is carried out so as not to doubly add the frequency of the particle diameter at the local minimum point (MIN1) on the large particle diameter side with respect to the first local maximum point (MAX1) included in both of the cumulative amount of frequencies between the peak start and the peak end of a peak having the first local maximum point (MAX1) and a cumulative amount of frequencies between a peak start and a peak end of a peak having the second local maximum point (MAX2).

The cumulative amount (V2) of frequencies between the peak start and the peak end of a peak having the second local maximum point (MAX2) is preferably 15% to 50% by volume. When the cumulative amount (V2) is 15% to 50% by volume, filling properties of the boron nitride powder in a heat-dissipation sheet can be further enhanced, and thermal conductivity of the heat-dissipation sheet can be made more excellent. From such a viewpoint, the cumulative amount (V2) is more preferably 20% to 45% by volume. Incidentally, the peak start of a peak having the second local maximum point (MAX2) is the local minimum point (MIN1) on the small particle diameter side with respect to the second local maximum point (MAX2). In addition, the peak end of the peak having the second local maximum point (MAX2) is a local minimum point (MIN2) on the large particle diameter side with respect to the second local maximum point (MAX2). Then, the cumulative amount (V2) of frequencies is a value obtained by subtracting the frequency of the particle diameter at the local minimum point (MIN2) on the large particle diameter side with respect to the second local maximum point (MAX2) from a cumulative amount of frequencies from the particle diameter at the local minimum point (MIN1) on the small particle diameter side with respect to the second local maximum point (MAX2) to the particle diameter at the local minimum point (MIN2) on the large particle diameter side with respect to the second local maximum point (MAX2). Incidentally, subtraction of the frequency of the particle diameter at the local minimum point (MIN2) on the large particle diameter side with respect to the second local maximum point (MAX2) is carried out so as not to doubly add the frequency of the particle diameter at the local minimum point (MIN2) on the large particle diameter side with respect to the second local maximum point (MAX2) included in both of the cumulative amount of frequencies between the peak start and the peak end of a peak having the second local maximum point (MAX2) and a cumulative amount of frequencies between a peak start and a peak end of a peak having the third local maximum point (MAX3).

The cumulative amount (V3) of frequencies between the peak start and the peak end of a peak having the third local maximum point (MAX3) is preferably 30% to 80% by volume. When the cumulative amount (V3) is 30% to 80% by volume, filling properties of the boron nitride powder in a heat-dissipation sheet can be further enhanced, and thermal conductivity of the heat-dissipation sheet can be made more excellent. From such a viewpoint, the cumulative amount (V3) is more preferably 45% to 75% by volume. Incidentally, the peak start of a peak having the third local maximum point (MAX3) is the local minimum point (MIN2) on the small particle diameter side with respect to the third local maximum point (MAX3). In addition, the peak end of the peak having the third local maximum point (MAX3) is a local minimum point on the large particle diameter side with respect to the third local maximum point (MAX3). In a case where there is no local minimum point on the large particle diameter side with respect to the third local maximum point (MAX3), the peak end is the end (DE) on the large particle diameter side in the particle size distribution. Then, the cumulative amount (V3) of frequencies is a value obtained by subtracting the frequency of the particle diameter at the local minimum point on the large particle diameter side with respect to the third local maximum point (MAX3) from a cumulative amount of frequencies from the particle diameter at the local minimum point (MIN2) on the small particle diameter side with respect to the third local maximum point (MAX3) to the particle diameter at the local minimum point on the large particle diameter side with respect to the third local maximum point (MAX3), or the cumulative amount (V3) of frequencies is a cumulative amount of frequencies from the particle diameter at the local minimum point (MIN2) on the small particle diameter side with respect to the third local maximum point (MAX3) to the particle diameter at the end (PE) on the large particle diameter side in the particle size distribution. Incidentally, subtraction of the frequency of the particle diameter at the local minimum point on the large particle diameter side with respect to the third local maximum point (MAX3) is carried out so as not to doubly add the frequency of the particle diameter at the local minimum point on the large particle diameter side with respect to the third local maximum point (MAX3) included in both of the cumulative amount of frequencies between the peak start and the peak end of a peak having the third local maximum point (MAX3) and a cumulative amount of frequencies between a peak start and a peak end of a peak having a local maximum point that is adj acent to the third local maximum point (MAX3) and is on the large particle diameter side with respect to the third local maximum point.

The particle size distribution of the boron nitride powder of the present invention may have another local maximum point in addition to the above-described first to third local maximum points as long as filling properties of the boron nitride powder in a heat-dissipation sheet can be enhanced.

Method of Producing Boron Nitride Powder

An example of a method of producing boron nitride powder according to the present invention is described below.

The boron nitride powder of the present invention is produced by separately preparing first boron nitride powder with a particle size distribution having the above-described first local maximum point, second boron nitride powder with a particle size distribution having the above-described second local maximum point, and third boron nitride powder with a particle size distribution having the above-described third local maximum point, and mixing the prepared first boron nitride powder to the third boron nitride powder, for example.

It is preferable that among the first boron nitride powder to the third boron nitride powder, the second boron nitride powder and the third boron nitride powder be each boron nitride powder including at least aggregated boron nitride particles in which hexagonal boron nitride primary particles are aggregated. In addition, the first boron nitride powder may be aggregated boron nitride particles but is preferably hexagonal boron nitride primary particles. The local maximum point of each of the first boron nitride powder to the third boron nitride powder means the apex of a peak in the particle size distribution of each of the first boron nitride powder to the third boron nitride powder. The particle size distribution of each of the first boron nitride powder to the third boron nitride powder is measured in the same manner as the particle size distribution of the boron nitride powder described above.

In the mixing step, the first boron nitride powder to the third boron nitride powder may be mixed such that a volume ratio of the third boron nitride powder is greater than a volume ratio of the second boron nitride powder, and a volume ratio of the second boron nitride powder is greater than a volume ratio of the first boron nitride powder. As a result, filling properties of the boron nitride powder can be further enhanced. From the viewpoint of improving thermal conductivity of a heat-dissipation sheet, the volume ratio of the third boron nitride powder is preferably 30 to 80 parts by volume, more preferably 45 to 75 parts by volume, and still more preferably 50 to 70 parts by volume based on 100 parts by volume of the first boron nitride powder to the third boron nitride powder in total. From the viewpoint of improving thermal conductivity of a heat-dissipation sheet, the volume ratio of the second boron nitride powder is preferably 15 to 50 parts by volume, more preferably 20 to 45 parts by volume, and still more preferably 25 to 35 parts by volume based on 100 parts by volume of the first boron nitride powder to the third boron nitride powder in total. From the viewpoint of improving thermal conductivity of a heat-dissipation sheet, the volume ratio of the first boron nitride powder is preferably 2 to 25 parts by volume, more preferably 5 to 20 parts by volume, and still more preferably 8 to 15 parts by volume based on 100 parts by volume of the first boron nitride powder to the third boron nitride powder in total.

Each of the first boron nitride powder to the third boron nitride powder may be produced by a production method including a pulverizing step of pulverizing massive boron carbide, a nitriding step of nitriding the pulverized boron carbide to obtain boron carbonitride, and a decarburizing step of decarburizing the boron carbonitride, for example.

In the pulverizing step, massive boron carbide (boron carbide block) is pulverized using a common pulverizing machine or disintegrating machine. At this time, boron carbide powder having a desired local maximum point can be obtained by adjusting the pulverizing time and the supply amount of the boron carbide block, for example. Incidentally, the local maximum point of boron carbide powder can be measured in the same manner as the local maximum point of boron nitride powder described above. In this way, the first boron nitride powder to the third boron nitride powder having the above-described local maximum points are obtained by adjusting the local maximum point of each type of boron carbide powder so as to be close to a desired local maximum point of boron nitride powder.

Subsequently, in the nitriding step, the boron carbide powder is baked in an atmosphere promoting nitriding reaction under a pressurized condition to obtain boron carbonitride.

The atmosphere during the nitriding step is an atmosphere promoting nitriding reaction, may be nitrogen gas, ammonia gas, and the like, and may be one kind thereof alone or a combination of two or more kinds thereof. The atmosphere is preferably nitrogen gas from the viewpoint of ease of nitriding and costs. A content of nitrogen gas in the atmosphere is preferably 95% by volume or more and more preferably 99.9% by volume or more.

A pressure during the nitriding step is preferably 0.6 MPa or more and more preferably 0.7 MPa or more, and preferably 1.0 MPa or less and more preferably 0.9 MPa or less. The pressure is still more preferably 0.7 to 1.0 MPa. A baking temperature during the nitriding step is preferably 1800°C or more and more preferably 1900°C or more, and preferably 2400°C or less and more preferably 2200°C or less. The baking temperature is still more preferably 1900°C to 2200°C. The pressure condition and the baking temperature are preferably 1800 °C or more and 0.7 to 1.0 MPa as these conditions further preferably promote nitriding of boron carbide and are industrially suitable.

A baking time during the nitriding step is appropriately selected within a range in which nitriding sufficiently proceeds and may be preferably 6 hours or more and more preferably 8 hours or more, and preferably 30 hours or less and more preferably 20 hours or less.

In the decarburizing step, heat treatment during which the boron carbonitride obtained by the nitriding step is kept at a predetermined holding temperature for a certain period in an atmosphere at ordinary pressure or more is carried out. As a result, aggregated boron nitride particles in which hexagonal boron nitride primary particles having been decarburized and crystallized are aggregated can be obtained.

The atmosphere during the decarburizing step is an ordinary pressure (atmospheric pressure) atmosphere or a pressurized atmosphere. In a case of the pressurized atmosphere, the pressure may be 0.5 MPa or less and preferably 0.3 MPa or less, for example.

In the decarburizing step, the temperature is firstly increased to a predetermined temperature (temperature at which decarburizing can be started), and the temperature is then further increased to a holding temperature at a predetermined temperature increasing rate. The predetermined temperature (temperature at which decarburizing can be started) can be set according to a system, and may be 1000°C or more and may be 1500°C or less and preferably 1200°C or less, for example. The rate at which the temperature is increased from the predetermined temperature (temperature at which decarburizing can be started) to the holding temperature may be, for example, 5°C/minute or less, preferably 4°C/minute or less, 3°C/minute or less, or 2°C/minute or less.

The holding temperature is preferably 1800°C or more and more preferably 2000°C or more from the viewpoint of facilitating successful particle growth and further improving thermal conductivity of the boron nitride powder obtained. The holding temperature may be preferably 2200°C or less and more preferably 2100°C or less.

The holding time at the holding temperature is appropriately selected within a range in which crystallization sufficiently proceeds, may exceed 0.5 hours, for example, and is preferably 1 hour or more, more preferably 3 hours or more, still more preferably 5 hours or more, and especially preferably 10 hours or more from the viewpoint of facilitating successful particle growth. The holding time at the holding temperature may be, for example, less than 40 hours and is preferably 30 hours or less, and more preferably 20 hours or less from the viewpoint of being capable of suppressing decrease of particle strength due to excessively advanced particle growth and from the viewpoint of cost reduction.

In the decarburizing step, decarburization and crystallization may be carried out with a boron source mixed as a raw material in addition to boron carbonitride obtained in the nitriding step. The boron source includes boric acid, boron oxide, or a mixture thereof. In this case, another additive used in this technical field may be further used as needed.

A mixing ratio between boron carbonitride and the boron source is appropriately selected. When boric acid or boron oxide is used as the boron source, a proportion of boric acid or boron oxide may be, for example, 100 parts by mass or more and is preferably 150 parts by mass or more, and may be, for example, 300 parts by mass or less and is preferably 250 parts by mass or less, based on 100 parts by mass of boron carbonitride.

A step (classifying step) of classifying, with a sieve, the boron nitride powder obtained as described above so as to obtain boron nitride powder having a desired particle size distribution may be carried out. The first boron nitride powder to the third boron nitride powder each having a desired local maximum point are more preferably obtained thereby.

The boron nitride powder of the present invention can be obtained by mixing the obtained first boron nitride powder to the third boron nitride powder. A mixing method is not particularly limited as long as the first boron nitride powder to the third boron nitride powder are uniformly mixed. For example, the first boron nitride powder to the third boron nitride powder may be mixed using a rotary container-type mixing device, the first boron nitride powder to the third boron nitride powder may be mixed using a stationary container-type mixing device, or the first boron nitride powder to the third boron nitride powder may be mixed using a fluid moving-type mixing device.

Heat-conductive Resin Composition

A heat-conductive resin composition can be prepared by mixing the boron nitride powder of the present invention and a resin. In addition, the heat-conductive resin composition may be prepared by mixing the first boron nitride powder to the third boron nitride powder described above and a resin.

Resin

Examples of the resin for the heat-conductive resin composition include an epoxy resin, a silicone resin (including silicone rubber), an acrylic resin, a phenol resin, a melamine resin, a urea resin, an unsaturated polyester, a fluororesin, a polyamide (for example, a polyimide, a polyamideimide, and polyetherimide), a polyester (for example, polybutylene terephthalate and polyethylene terephthalate), a polyphenylene ether, a polyphenylene sulfide, a fully aromatic polyester, a polysulfone, a liquid crystal polymer, a polyethersulfone, a polycarbonate, a maleimide-modified resin, an ABS resin, an AAS (acrylonitrile-acrylic rubber-styrene) resin, and an AES (acrylonitrile-ethylene-propylene-diene rubber-styrene) resin. Among these, from the viewpoints of heat resistance, flexibility, and adhesiveness to a heat sink and the like, a silicone resin is preferable. A silicone resin cured through vulcanization with an organic peroxide is preferable. In addition, a viscosity at 25°C of the heat-conductive resin composition is, for example, 100,000 cp or less from the viewpoint of improving flexibility of a sheet-shaped article.

A content of the boron nitride powder based on 100% by volume of the boron nitride powder and the resin in total in the heat-conductive resin composition is preferably 30% to 85% by volume and more preferably 40% to 80% by volume. When the content of the boron nitride powder is 30% by volume or more, thermal conductivity improves and sufficient heat-dissipation performance is easily obtained. In addition, when the content of the boron nitride powder is 85% by volume or less, voids can be prevented from being easily generated during shaping, and reduction in insulation properties and mechanical strength can be suppressed. In addition, a content of the resin is preferably 15% to 70% by volume and more preferably 20% to 60% by volume based on 100% by volume of the boron nitride powder and the resin in total.

Solvent

In order to adjust the viscosity of the heat-conductive resin composition, the heat-conductive resin composition may further include a solvent. The solvent is not particularly limited as long as it can dissolve the resin and is easily removed from the heat-conductive resin composition after the heat-conductive resin composition is applied. When the resin is a silicone resin, examples of the solvent include toluene, xylene, and a chlorinated hydrocarbon. From the viewpoint of ease in removal, toluene is preferable among these solvents. A content of the solvent may be appropriately selected according to an aimed viscosity of the heat-conductive resin composition. The content of the solvent is, for example, 40 to 200 parts by mass based on 100 parts by mass of components of the heat-conductive resin composition other than the solvent.

Incidentally, the heat-conductive resin composition may include a component other than the boron nitride powder, the resin component, and the solvent. Other components include an inorganic filler other than the boron nitride powder, additives, impurities, and the like, and contents of the other components are preferably 5 parts by mass or less, more preferably 3 parts by mass or less, and still more preferably 1 part by mass or less based on 100 parts by mass of the boron nitride powder and the resin in total.

Heat-dissipation Sheet

A heat-dissipation sheet of the present invention is obtained by shaping the above-described heat-conductive resin composition.

Thickness of Heat-dissipation Sheet

A thickness of the heat-dissipation sheet of the present invention is preferably 100 to 1200 $\mu$m. When the thickness of the heat-dissipation sheet is 100 $\mu$m or more, the heat-dissipation sheet can be surely adhered to a heat generating electronic component tightly. When the thickness of the heat-dissipation sheet is 1200 $\mu$m or less, heat-dissipation of the heat-dissipation sheet can be further improved. From such a viewpoint, the thickness of the heat-dissipation sheet of the present invention is more preferably 150 to 800 $\mu$m and still more preferably 200 to 600 $\mu$m.

Heat-dissipation Sheet Production Method

A method of producing the heat-dissipation sheet according to the present invention includes (A) a step of mixing the boron nitride powder of the present invention and a resin to prepare a heat-conductive resin composition, (B) a step of shaping the heat-conductive resin composition into a sheet to prepare a heat-conductive resin composition sheet, and (C) a step of heating and pressurizing the heat-conductive resin composition sheet under vacuum.

Step (A)

In step (A), the boron nitride powder of the present invention and a resin are mixed to prepare preparing a heat-conductive resin composition. As the boron nitride powder and the resin used in step (A) have already described, explanation thereof is omitted.

Step (B)

In step (B), the heat-conductive resin composition is shaped into a sheet to prepare a heat-conductive resin composition sheet. For example, the heat-conductive resin composition can be shaped into a sheet by means of a doctor blade method or calender processing. However, when the heat-conductive resin composition passes through a calender roll, aggregated boron nitride particles in the heat-conductive resin composition may fracture. Therefore, it is preferable that the heat-conductive resin composition be shaped into a sheet by a doctor blade method.

Step (C)

In step (C), the heat-conductive resin composition sheet is heated and pressurized under vacuum. Consequently, filling properties of the boron nitride powder in the heat-dissipation sheet can be further enhanced, and thermal conductivity of the heat-dissipation sheet can be made further excellent. In addition, since microvoids in the heat-dissipation sheet can also be reduced thereby, thermal conductivity of the heat-dissipation sheet can be made further excellent, and insulation properties of the dissipation sheet can be improved. From the viewpoint of improving filling properties of the boron nitride powder and the viewpoint of reducing microvoids in the heat-dissipation sheet, a pressure in the vacuum environment in heating and pressurizing the heat-conductive resin composition sheet is preferably 0.1 to 5 kPa and more preferably 0.1 to 3 kPa. In addition, a temperature for heating the heat-conductive resin composition sheet is preferably 120°C to 200°C and more preferably 130°C to 180°C. Furthermore, the pressure in pressurizing the heat-conductive resin composition sheet is preferably 80 to 250 kg/cm$^2$ and more preferably 100 to 200 kg/cm$^2$.
Incidentally, in the present invention, an alkyl group-containing silane coupling agent is contained in the boron nitride powder, and the coupling agent moderately binds to a resin through an intermolecular force, as described above; therefore, it is considered that the coupling agent can move in this step (C), and voids are more efficiently reduced.

Examples

Hereinafter, the present invention will be described in detail with Examples and Comparative Example. Note that the present invention is not limited to the following Examples.

Evaluation Methods

## Evaluation of (Ia/Ib) × 100

FT-IR measurement was conducted on boron nitride powder obtained in each of Examples and Comparative Example using "INVENIO S" manufactured by Bruker Corporation (resolution: 4 cm$^{-1}$, measurement range: 4000 to 650 cm$^{-1}$). The measurement was conducted as follows: after conducting background measurement with single reflection ATR, a sample of boron nitride powder was set, and the surface of the sample was measured with the number of scanning cycles of 32. Measurement results were output, with the vertical axis (Y-axis) indicating absorption, and the horizontal axis indicating wavenumber, intensity Ia of the infrared absorption peak (2923 cm$^{-1}$ ± 2 cm$^{-1}$) originating from alkyl groups and intensity Ib of the infrared absorption peak (1377 cm$^{-1}$ ± 2 cm$^{-1}$) originating from boron nitride were calculated with analysis software OPUS, and the strength ratio (Ia/Ib) therebetween was calculated.

Particle Size Distribution

The particle size distribution of boron nitride powder was measured by using a laser diffraction scattering particle size distribution measurement device (LS-13 320) manufactured by Beckman Coulter, Inc. Then, the particle diameters at the first to third local maximum points (first to third local maximum values), the cumulative amount of frequencies between the peak start and the peak end of each of the peaks having the first to third local maximum points (first to third cumulative frequency amounts), the absolute value of the difference between the particle diameter at which the cumulative amount of frequencies becomes 10% and the particle diameter at the local minimum point between the local maximum point with the smallest particle diameter and the local maximum point with the second smallest particle diameter (distance between D10 and the first local minimum value), the absolute value of the difference between the particle diameter at the first local minimum point and the particle diameter at the second local minimum point (distance between local minimum values), and the half-width of the peak having the third local maximum point (half-width of the local maximum value 3) were obtained from the obtained particle size distribution.

Crushing Strength

The crushing strength of aggregated boron nitride particles was measured in accordance with JIS R1639-5:2007. Specifically, after dispersing aggregated boron nitride particles on a sample stage of a micro compression test machine ("MCT-W500" manufactured by SHIMADZU CORPORATION), five aggregated boron nitride particles were selected, and a compression test was conducted on each particle. Then, the crushing strength ($\sigma$: MPa) was calculated from the dimensionless number ($\alpha = 2.48$) changing depending on locations within a particle, the crushing test power (P: N), and the particle diameter (d: $\mu$m) using the following equation: $\sigma = \alpha \times P/(\pi \times d^2)$. In accordance with JIS R1625:2010, the crushing strength of five particles of the inorganic filler component was plotted as a Weibull plot, and the crushing strength at which the cumulative crushing rate reached 63.2% was taken as the crushing strength of the aggregated boron nitride particles.

The following evaluations were conducted on heat-dissipation sheets of Examples and Comparative Example.

Insulation Properties

The insulation breakdown voltage of each heat-dissipation sheet was evaluated on the basis of a value obtained through measurement in a short-time breakdown test (room temperature: 23°C) in accordance with the method described in JIS C2110-1:2016.

Evaluation criteria for insulation properties are as follows.

A: Insulation breakdown voltage was 10 kV or more
B: Insulation breakdown voltage was 5 kV or more and less than 10 kV
C: Insulation breakdown voltage was less than 5 kV

Thermal Conductivity

The thermal resistance of each heat-dissipation sheet was evaluated on the basis of a value obtained through measurement in accordance with the method described in ASTM D5470:2017.

Evaluation criteria for thermal conductivity are as follows.

A: Thermal conductivity was 5 W/(m•K) or more
B: Thermal conductivity was 3 W/(m•K) or more and less than 5 W/(m•K)

C: Thermal conductivity was less than 3 W/(m•K)

Production of Boron Nitride Powder with One Local Maximum Point

Boron nitride powder A to boron nitride powder L each having one local maximum point to be used as a raw material for boron nitride powder with multiple local maximum points were prepared as follows.

Boron Nitride Powder A

Boron nitride powder A was prepared through boron carbide synthesis, a pressure nitriding step, and a decarburizing crystallization step as follows.

Boron Carbide Synthesis

Using Henschel mixer, 100 parts by mass of orthoboric acid (hereinafter, boric acid) manufactured by Nippon Denko Co., Ltd. and 35 parts by mass of acetylene black (HS100) manufactured by Denka Company Limited were mixed, and a graphite crucible was then filled with the mixture, followed by heating at 2200°C for five hours in an argon atmosphere using an arc furnace to synthesize boron carbide ($B_4C$). The synthesized boron carbide block was pulverized with a ball mill for one hour, screened with a wire sieve to separate particles with particle diameters of 75 $\mu$m or less, and further washed with a nitric acid aqueous solution to remove impurities such as iron, followed by filtration and drying to prepare boron carbide powder with an average particle diameter of 4 $\mu$m.

Pressure Nitriding Step

A boron nitride crucible was filled with the synthesized boron carbide, followed by heating under conditions of 2000°C and 9 atoms (0.8 MPa) for ten hours in a nitrogen gas atmosphere using a resistance heating furnace to obtain boron carbonitride ($B_4CN_4$).

Decarburizing Crystallization Step

Using Henschel mixer, 100 parts by mass of the synthesized boron carbonitride and 90 parts by mass of boric acid, and a boron nitride crucible was then filled with the mixture, followed by heating at a baking temperature of 2020°C under a pressure condition of 0.2 MPa in a nitrogen gas atmosphere using a resistance heating furnace to synthesize aggregated boron nitride particles in which primary particles were aggregated to form a block, wherein the temperature increase rate from room temperature to 1000°C was 10°C/min, the temperature increase rate from 1000°C was 2°C/min, and the holding time at 2020°C was ten hours. The synthesized aggregated boron nitride particles were disintegrated for 15 minutes with Henschel mixer, and classification using a wire sieve was subsequently conducted with a Nylon sieve having a sieve size of 150 $\mu$m. The baked product was disintegrated and classified to obtain boron nitride powder A including aggregated boron nitride particles in which primary particles were aggregated to form a block.

The average particle diameter (D50) of obtained boron nitride powder A measured by a laser scattering method was 4.5 $\mu$m. As a result of SEM observation, obtained boron nitride powder A was scaly particles.

Boron Nitride Powder B

Boron nitride powder B was prepared in the same manner as boron nitride powder A except that boron carbide powder with an average particle diameter of 6 $\mu$m was used. Incidentally, the average particle diameter (D50) of obtained boron nitride powder B measured by a laser scattering method was 8 $\mu$m. As a result of SEM observation, obtained boron nitride powder B was scaly particles.

Boron Nitride Powder C

Boron nitride powder C was prepared in the same manner as boron nitride powder A except that boron carbide powder with an average particle diameter of 1 $\mu$m was used. Incidentally, the average particle diameter (D50) of obtained boron nitride powder C measured by a laser scattering method was 1 $\mu$m. As a result of SEM observation, obtained boron nitride powder C was scaly particles.

Boron Nitride Powder D

Boron nitride powder D was prepared in the same manner as boron nitride powder A except that boron carbide powder with an average particle diameter of 15 $\mu$m was used. Incidentally, the average particle diameter (D50) of obtained boron nitride powder D measured by a laser scattering method was 23 $\mu$m. As a result of SEM observation, obtained boron nitride powder D was aggregated particles in which primary particles were aggregated.

Boron Nitride Powder E

Boron nitride powder E was prepared in the same manner as boron nitride powder A except that boron carbide powder with an average particle diameter of 10 $\mu$m was used. Incidentally, the average particle diameter (D50) of obtained boron nitride powder E measured by a laser scattering method was 15 $\mu$m. As a result of SEM observation, obtained boron nitride powder E was aggregated particles in which primary particles were aggregated.

Boron Nitride Powder F

Boron nitride powder F was prepared in the same manner as boron nitride powder A except that boron carbide powder with an average particle diameter of 25 $\mu$m was used. Incidentally, the average particle diameter (D50) of obtained boron nitride powder F measured by a laser scattering method was 35 $\mu$m. As a result of SEM observation, obtained boron nitride powder F was aggregated particles in which primary particles were aggregated.

Boron Nitride Powder G

Boron nitride powder G was prepared in the same manner as boron nitride powder A except that boron carbide powder with an average particle diameter of 12 $\mu$m was used. Incidentally, the average particle diameter (D50) of obtained boron nitride powder G measured by a laser scattering method was 18 $\mu$m. As a result of SEM observation, obtained boron nitride powder G was aggregated particles in which primary particles were aggregated.

Boron Nitride Powder H

Boron nitride powder H was prepared in the same manner as boron nitride powder A except that boron carbide powder with an average particle diameter of 55 $\mu$m was used. Incidentally, the average particle diameter (D50) of obtained boron nitride powder H measured by a laser scattering method was 78 $\mu$m. As a result of SEM observation, obtained boron nitride powder H was aggregated particles in which primary particles were aggregated. In addition, the half-width of the peak of boron nitride powder N in particle size distribution was 46 $\mu$m.

Boron Nitride Powder I

Boron nitride powder I was prepared in the same manner as boron nitride powder A except that boron carbide powder with an average particle diameter of 70 $\mu$m was used. Incidentally, the average particle diameter (D50) of obtained boron nitride powder I measured by a laser scattering method was 95 $\mu$m. As a result of SEM observation, obtained boron nitride powder I was aggregated particles in which primary particles were aggregated. In addition, the half-width of the peak of boron nitride powder N in particle size distribution was 53 $\mu$m.

Boron Nitride Powder J

Boron nitride powder J was prepared in the same manner as boron nitride powder A except that boron carbide powder with an average particle diameter of 40 $\mu$m was used. Incidentally, the average particle diameter (D50) of obtained boron nitride powder J measured by a laser scattering method was 55 $\mu$m. As a result of SEM observation, obtained boron nitride powder J was aggregated particles in which primary particles were aggregated. In addition, the half-width of the peak of boron nitride powder N in particle size distribution was 28 $\mu$m.

Boron Nitride Powder K

Boron nitride powder J was prepared in the same manner as boron nitride powder A except that boron carbide powder with an average particle diameter of 65 $\mu$m was used. Incidentally, the average particle diameter (D50) of obtained boron nitride powder J measured by a laser scattering method was 82 $\mu$m. As a result of SEM observation, obtained boron nitride powder K was aggregated particles in which primary particles were aggregated. In addition, the half-width of the peak of boron nitride powder N in particle size distribution was 45 μm.

Boron Nitride Powder L

Boron nitride powder L was prepared in the same manner as boron nitride powder A except that boron carbide powder with an average particle diameter of 50 μm was used. Incidentally, the average particle diameter (D50) of obtained boron nitride powder J measured by a laser scattering method was 73 μm. As a result of SEM observation, obtained boron nitride powder L was aggregated particles in which primary particles were aggregated. In addition, the half-width of the peak of boron nitride powder N in particle size distribution was 48 μm.

Examples 1 to 9

These types of boron nitride powder were mixed as shown in Table 1 to prepare boron nitride mixtures, and the boron nitride mixtures were subjected to the following surface treatment. Then, heat-dissipation sheets were produced as described below, and the above evaluations were conducted thereon. Evaluation results are shown in Table 2.

Surface Treatment

One part by mass of the silane coupling agent shown in Table 1 is added to 100 parts by mass of the boron nitride powder (mixture), followed by dry mixing for 0.5 hours, and the mixture was passed through a sieve of 75 μm to obtain surface-treated boron nitride powder.

Production of Heat-dissipation Sheet

Into a stirrer (product name "three-one motor" manufactured by HEIDON) were put 60% by volume of boron nitride powder and 40% by volume of silicone resin 1 based on 100% by volume of the obtained boron nitride powder and liquid silicone resin (methylvinyl polysiloxane, manufactured by Dow Toray Co., Ltd., product name "CF-3110") in total, one part by mass of a curing agent (2,5-dimethyl-2,5-bis(t-butylperoxy)hexane, manufactured by KAYAKU NOURYON CORPORATION, product name "Trigonox 101") based on 100 parts by mass of the silicone resin, 0.5 parts by mass of a silane coupling agent (dimethyldimethoxysilane, manufactured by Dow Toray Co., Ltd., product name "DOWSIL Z-6329 Silane," viscosity at 25°C: 1 cp) based on 100 parts by mass of boron nitride powder in total, 15 parts by mass of water based on 100 parts by mass of the silane coupling agent, and 110 parts by mass of toluene based on 100 parts by mass of the above-described raw materials in total, followed by mixing using a turbine-type stirring blades for 15 hours to prepare heat-conductive resin composition slurry.

Then, the above slurry was applied, by a doctor blade method, onto a PET film (carrier film) with a thickness of 0.05 mm to achieve a slurry thickness of 1.0 mm, followed by drying at 75°C for five minutes to produce a sheet-shaped article with a PET film. A PET film with a thickness of 0.05 mm was stacked on the heat-conductive resin composition side of the sheet-shaped article with a PET film to produce a laminated body. Incidentally, this laminated body had the layered structure of PET film/heat-conductive resin composition/PET film. Thereafter, the obtained laminated body was hot-pressed for 30 minutes under vacuum (pressure: 3.5 kPa) and conditions in which the temperature was 150°C and the pressure was 160 kg/cm$^2$, and the PET films on both sides were peeled to obtain a sheet with a thickness of 1.0 mm. Then, the sheet was subjected to secondary heating, under ordinary pressure, at 150°C for four hours to obtain a heat-dissipation sheet.

Comparative Example 1

Boron nitride powder and a heat-dissipation sheet were obtained in the same manner as Example 1 except that the surface treatment with the alkyl group-containing silane coupling agent was not carried out in Example 1. Evaluation results are shown in Table 2.

[Table 1]

Table 1

| Boron nitride powder (mass%) | | Examples | | | | | | | | | Comparative Example |
|---|---|---|---|---|---|---|---|---|---|---|---|
| | | 1 | 2 | 3 | 4 | 5 | 6 | 7 | 8 | 9 | 1 |
| Fine particle | A | 22 | 22 | 22 | 22 | 22 | | | | 48 | 22 |
| | B | | | | | | 26 | | | | |
| | C | | | | | | | 13 | | | |
| Middle particle | D | 26 | 26 | 26 | 26 | 26 | | | | | 26 |
| | E | | | | | | 26 | | | | |
| | F | | | | | | | 26 | | | |
| | G | | | | | | | | 48 | | |
| Coarse particle | H | 52 | 52 | 52 | 52 | 52 | | | | | 52 |
| | I | | | | | | 48 | | | | |
| | J | | | | | | | 61 | | | |
| | K | | | | | | | | 52 | | |
| | L | | | | | | | | | 52 | |
| Alkyl group-containing silane coupling agent | | A | B | C | D | E | B | B | A | A | - |

Silane coupling agent A: lauryltrimethoxysilane, 12 carbon atoms in an alkyl group, product name "D3383," manufactured by Tokyo Chemical Industry Co., Ltd.

Silane coupling agent B: n-decyltrimethoxysilane, 10 carbon atoms in an alkyl group, product name "DOWSIL Z-6210 Silane," manufactured by Dow Toray Co., Ltd.

Silane coupling agent C: octyltriethoxysilane, 8 carbon atoms in an alkyl group, product name "DOWSIL Z-6341 Silane," manufactured by Dow Toray Co., Ltd.

Silane coupling agent D: dimethyldimethoxysilane, 1 carbon atom in an alkyl group, product name "DOWSIL Z-6329 Silane," manufactured by Dow Toray Co., Ltd.

Silane coupling agent E: hexyltriethoxysilane, 6 carbon atoms in an alkyl group, product name "KBE-3063," manufactured by Shin-Etsu Chemical Co., Ltd.

[Table 2]

Table 2

| | Unit | Examples | | | | | | | | | Comparative Example |
|---|---|---|---|---|---|---|---|---|---|---|---|
| | | 1 | 2 | 3 | 4 | 5 | 6 | 7 | 8 | 9 | 1 |
| IR evaluation | | B | B | B | B | B | B | B | B | B | C |
| Alkyl chain length (carbon number) | | 12 | 10 | 8 | 1 | 6 | 10 | 10 | 12 | 12 | - |
| $(Ia/Ib) \times 100$ | | 31.2 | 26.5 | 24.2 | 0.6 | 14.6 | 22 | 28 | 27 | 30 | 0 |
| Local maximum value 1 (fine particle) | μm | 4.5 | 4.5 | 4.5 | 4.5 | 4.5 | 8 | 1 | - | 4.5 | 4.5 |
| Local maximum value 2 (middle particle) | μm | 23 | 23 | 23 | 23 | 23 | 15 | 35 | 18 | - | 23 |
| Local maximum value 3 (coarse particle) | μm | 78 | 78 | 78 | 78 | 78 | 95 | 55 | 82 | 73 | 78 |

(continued)

| | Unit | Examples | | | | | | | | | Comparative Example |
|---|---|---|---|---|---|---|---|---|---|---|---|
| | | 1 | 2 | 3 | 4 | 5 | 6 | 7 | 8 | 9 | 1 |
| Distance between D10 and first local minimum value | μm | 8 | 8 | 8 | 8 | 8 | 4 | 17 | 0 | 28 | 8 |
| Distance between local minimum values | μm | 30 | 30 | 30 | 30 | 30 | 43 | 21 | - | - | 30 |
| Half-width of local maximum value 3 | μm | 46 | 46 | 46 | 46 | 46 | 28 | 53 | 45 | 48 | 46 |
| Crushing strength | MPa | 8 | 8 | 8 | 8 | 8 | 12 | 6 | 9 | 10 | 8 |
| Insulation properties | | B | A | A | B | A | B | B | B | B | C |
| Thermal conductivity | | B | A | A | B | A | B | B | B | B | C |

From the evaluation results of the heat-dissipation sheets of Examples and the heat-dissipation sheet of Comparative Example, it has been found that insulation properties and thermal conductivity of heat-dissipation sheets are both improved through surface treatment with an alkyl group-containing silane coupling agent.

In addition, it has been found that insulation properties and thermal conductivity of heat-dissipation sheets are further improved by setting the chain length of the alkyl group of the silane coupling agent to fall within a certain range, setting the ratio between the strength of the infrared absorption peak originating from alkyl groups and the strength of the infrared absorption peak originating from boron nitride to fall within a certain range, and further controlling the particle size distribution of boron nitride powder constituting the heat-dissipation sheets to fall within a certain range.

**Claims**

1.   Aggregated boron nitride particles in which hexagonal boron nitride primary particles are aggregated, the aggregated boron nitride particles comprising an alkyl group-containing silane coupling agent.

2.   The aggregated boron nitride particles according to claim 1, wherein an alkyl group of the alkyl group-containing silane coupling agent has 1 to 14 carbon atoms.

3.   The aggregated boron nitride particles according to claim 1 or 2, wherein a ratio $((Ia/Ib) \times 100)$ between intensity Ia of an infrared absorption peak (2923 $cm^{-1} \pm 2$ $cm^{-1}$) originating from an alkyl group and intensity Ib of an infrared absorption peak (1377 $cm^{-1} \pm 2$ $cm^{-1}$) originating from boron nitride is within a range of 0.1 to 50.

4.   Boron nitride powder comprising at least the aggregated boron nitride particles according to any one of claims 1 to 3, wherein a particle size distribution of the boron nitride powder has at least a first local maximum point, a second local maximum point with a particle diameter larger than that at the first local maximum point, and a third local maximum point with a particle diameter larger than that at the second local maximum point,

the particle diameter at the first local maximum point is 0.4 μm or more and less than 10 μm,
the particle diameter at the second local maximum point is 10 μm or more and less than 40 μm, and
the particle diameter at the third local maximum point is 40 μm or more and less than 110 μm.

5.   The boron nitride powder according to claim 4, wherein an absolute value of a difference between a particle diameter at which a cumulative amount of frequencies becomes 10% in the particle size distribution of the boron nitride powder and a particle diameter at a local minimum point between a local maximum point with the smallest particle diameter and a local maximum point with the second smallest particle diameter in the particle size distribution of the boron nitride powder is 3 to 30 μm.

6.   The boron nitride powder according to claim 4 or 5, wherein a local maximum point adjacent to the first local maximum point is the second local maximum point, a local maximum point adjacent to the second local maximum point is the third local maximum point, and an absolute value of a difference between a particle diameter at a first local minimum point between the first local maximum point and the second local maximum point, and a particle diameter at a second local minimum point between the second local maximum point and the third local maximum point is 15 to 60 $\mu$m.

7. The boron nitride powder according to any one of claims 4 to 6, wherein a half-width of a peak having the third local maximum point is 20 to 60 $\mu$m.

8. The boron nitride powder according to any one of claims 4 to 7, wherein crushing strength of the aggregated boron nitride particles is 5 to 18 MPa.

9. A heat-conductive resin composition comprising the boron nitride powder according to any one of claims 4 to 8.

10. A heat-dissipation sheet formed by shaping the heat-conductive resin composition according to claim 9.

[Fig. 1]

## INTERNATIONAL SEARCH REPORT

| International application No. |
|---|
| **PCT/JP2021/048887** |

| | |
|---|---|
| **A. CLASSIFICATION OF SUBJECT MATTER** | |

*C01B 21/064*(2006.01)i; *C08K 3/38*(2006.01)i; *C08K 5/5419*(2006.01)i; *C08L 83/07*(2006.01)i; *C08L 101/00*(2006.01)i; *C09K 5/14*(2006.01)i

FI: C01B21/064 M; C08K3/38; C08K5/5419; C08L83/07; C08L101/00; C09K5/14 E

According to International Patent Classification (IPC) or to both national classification and IPC

| | |
|---|---|
| **B. FIELDS SEARCHED** | |

Minimum documentation searched (classification system followed by classification symbols)

    C01B21/064; C08K3/38; C08K5/5419; C08L83/07; C08L101/00; C09K5/14

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

| | |
|---|---|
| **C. DOCUMENTS CONSIDERED TO BE RELEVANT** | |

| Category* | Citation of document, with indication, where appropriate, of the relevant passages | Relevant to claim No. |
|---|---|---|
| X | JP 2016-108457 A (SHOWA DENKO K.K.) 20 June 2016 (2016-06-20) claims 1-5, paragraphs [0079], [0080] | 1-3 |
| A | | 4-10 |
| A | WO 2016/092951 A1 (SHOWA DENKO K.K.) 16 June 2016 (2016-06-16) claims 1-9, paragraphs [0063]-[0097], fig. 7 | 1-10 |
| A | JP 2020-164365 A (DENKA CO., LTD.) 08 October 2020 (2020-10-08) claims 1-8, paragraphs [0053]-[0061], fig. 1-4 | 1-10 |
| A | JP 2016-027144 A (SUMITOMO BAKELITE CO., LTD.) 18 February 2016 (2016-02-18) claims 1-15 | 1-10 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 January 2022** | **01 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/048887**

| Patent document cited in search report | | | Publication date (day/month/year) | Patent family member(s) | | | Publication date (day/month/year) |
|---|---|---|---|---|---|---|---|
| JP | 2016-108457 | A | 20 June 2016 | WO | 2016/092734 | A1 | |
| | | | | TW | 201634547 | A | |
| WO | 2016/092951 | A1 | 16 June 2016 | TW | 201630806 | A | |
| JP | 2020-164365 | A | 08 October 2020 | (Family: none) | | | |
| JP | 2016-027144 | A | 18 February 2016 | US | 2016/0002520 | A1 | |
| | | | | claims 1-15 | | | |
| | | | | CN | 105244334 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020164365 A